# FASCICULE DE BREVET EUROPEEN

(11) **EP 2 462 796 B1**
(45) Date de publication et mention de la délivrance du brevet: **21.05.2014**
(21) Numéro de dépôt: 11358013.8
(22) Date de dépôt: 30.11.2011
(51) Int. Cl.: A01D 46/28

(54) **Ecaille à rebord d'arrêt pour plancher de collecte de tête de récolte de petits fruits et tête de récolte en faisant application**
Abdeckung mit Auffangrand für Sammelboden eines Erntekopfes für Kleinobst, sowie entsprechender Erntekopf
Scale with halting lip for a collection floor of a berry harvesting head and corresponding harvesting head

(30) Priorité: 07.12.2010 FR 1004753
(43) Date de publication de la demande: 13.06.2012
(73) Titulaire: PELLENC (Société Anonyme), 84120 Pertuis (FR)
(72) Inventeur: Pellenc, Roger, 84120 Pertuis (FR); Rolland, Christian, 84160 Cucuron (FR)
(74) Mandataire: Marek, Pierre

(56) Documents cités:
- DE-A1- 2 036 899
- FR-A1- 2 157 824
- GB-A- 2 007 074

## Description

La présente invention concerne une écaille à rebord d'arrêt pour plancher collecteur de tête de récolte de petits fruits. Elle vise également les têtes de récolte en faisant application, en particulier les têtes de récoltes équipées d'un plancher traversable étanche.

Plus particulièrement, elle s'applique aux machines de récolte de petits fruits non gorgés de jus et de sucre, tels qu'olives, noisettes, noix, amandes...., produits par des arbres ou arbustes cultivés en rangs.

Cette application intéressante n'est toutefois pas limitative, l'invention pouvant également être utilisée pour la récolte d'autres petits fruits, produits par des arbres, arbustes ou buissons cultivés en rangs, tels que raisins, cassis, groseilles, myrtilles, canneberges, mirabelles, cerises du caféier, ....

Avantageusement, l'invention est applicable aux têtes de récolte du genre comprenant un bâti enjambeur en forme de portique, ce bâti enjambeur supportant notamment, d'une part, un système de secouage constitué de deux ensembles de détachement des fruits montés en vis-à-vis et séparés par un espace ou couloir vertical, et, d'autre part, un système de réception et de convoyage pour recevoir les fruits détachés des arbres secoués et les acheminer jusqu'à un récipient récepteur de grande contenance, par exemple constitué par une benne installée de chaque côté et en partie haute du châssis de la machine équipée de la tête de récolte, ou par la benne d'un véhicule circulant à côté de ladite machine. Le système de réception et de convoyage des fruits détachés comprend deux ensembles symétriquement montés de part et d'autre du plan vertical médian de la tête de récolte.

On utilise actuellement principalement deux modes d'exécution du système de réception et de convoyage des fruits détachés par les têtes de récoltes de ce genre.

Selon l'un de ces modes de réalisation, ce système est constitué par deux ensembles de réception et de convoyage disposés de part et d'autre du plan vertical médian de la tête de récolte. Chacun de ces ensembles est réalisé sous forme d'une noria formée d'une succession de godets et configurée pour constituer à la fois un plan de collecte lors de son trajet horizontal inférieur et un convoyeur permettant d'acheminer les fruits recueillis jusqu'au dispositif récepteur de la récolte.

Selon ce mode de réalisation, les norias de godets récepteurs sont entrainées à une vitesse identique à celle de la vitesse d'avancement de la machine de récolte, de sorte que lesdits godets récepteurs ont, lors de leur trajectoire inférieure, une vitesse de déplacement nulle par rapport aux troncs ou pieds des arbustes fruitiers avec lesquels ils se trouvent en contact.

Cette solution technique qui procure une bonne étanchéité lors du passage des piquets et des pieds d'arbustes présente cependant plusieurs inconvénients.

Un premier inconvénient découle du fait que les godets récepteurs doivent nécessairement avancer à une vitesse égale à celle de la vitesse de déplacement de la machine, faute de quoi ces godets se trouveraient rapidement mis hors d'usage en raison des chocs qui résulteraient de leur entrée en contact avec les pieds des arbustes. Dans ces conditions, en cas de forte production, c'est-à-dire lorsque la récolte est abondante, la capacité limitée des godets ne permet pas de recevoir et d'acheminer le volume trop important de baies récoltées.

Un autre inconvénient résulte du fait qu'il s'agit d'un système coûteux.

En outre, les godets sont relativement fragiles, de sorte qu'ils se trouvent exposés à une détérioration, par exemple par suite d'un défaut de synchronisation entre la vitesse d'avancement de la machine et la vitesse de déplacement desdits godets ou en cas de patinage de ladite machine, par exemple sur des terrains détrempés.

Selon une deuxième solution technique, le système de réception et de convoyage des fruits détachés comprend deux ensembles parallèles et contigus montés en partie basse du bâti enjambeur, de part et d'autre du plan vertical médian de la tête de récolte.

Actuellement, ce système comprend, d'une part, un plan de collecte ou plancher traversable articulé constitué de plaques ou écailles chevauchantes, inclinées et pivotantes, et, d'autre part, deux dispositifs de transfert de la récolte brute recueillie, déversée par le plancher articulé, disposés de part et d'autre de ce dernier.

Le plancher articulé de réception des fruits détachés des arbustes est ainsi formé de deux sous-ensembles constitués, chacun, d'une pluralité d'écailles pivotantes disposées en succession, en recouvrement partiel les unes des autres, avec une orientation de sens contraire au sens d'avancement de la tête de récolte, en cours de travail. Selon cet agencement, le bord interne de la rangée d'écailles de l'un des sous-ensembles du plancher traversable articulé, recouvre le bord interne de la rangée d'écailles de l'autre sous-ensemble.

Ces écailles sont constituées par des plaques réalisées en une matière plastique appropriée, telle que polyamide ou polyéthylène ou autre matière plastique présentant la rigidité requise. Elles présentent une forme allongée, et comprennent une extrémité de fixation ou extrémité proximale permettant leur montage avec une latitude de pivotement sur un support longitudinal horizontal solidaire du châssis de la tête de récolte, et une extrémité libre ou extrémité distale ; elles présentent souvent une configuration générale approximativement trapézoïdale et une largeur croissante en direction de leur extrémité distale libre.

Une tête de récolte utilisant de telles écailles de collecte est bien connue de l'homme du métier ; elle équipe, aujourd'hui, la grande majorité des machines à vendanger le raisin, et, depuis peu, quelques machines de récolte d'autres petits fruits produits par des arbres de taille réduite, tels que les olives.

Le principe d'action de cette tête de récolte est de détacher les fruits des arbustes ou des arbres cultivés en rangs en les enjambant et en les secouant. La machine avance sur le rang, les arbustes ou arbres enjambés par celle-ci, passent dans le tunnel de récolte de la tête de récolte et sont secoués par le dispositif de battage. Une partie des fruits décrochés des arbres ou arbustes est projetée contre des bâches latérales disposées de part et d'autre du dispositif de battage et parallèlement au sens d'avancement de la machine. Ces bâches latérales servent à amortir l'impact des fruits pour qu'ils ne s'abîment pas et elles servent également à éviter que les fruits ne soient éjectés en dehors de la machine, par les côtés de celle-ci. L'autre partie des fruits décrochés de l'arbre, tout comme la partie des fruits projetés contre les bâches, tombent sur les écailles rigides ou dans les convoyeurs, soit directement, soit en rebondissant sur les branches des arbustes ou des arbres. Les écailles de gauche se chevauchent légèrement suivant le sens d'avancement de la machine et elles sont inclinées de manière à diriger les fruits vers le convoyeur de gauche. Les écailles de droite se chevauchent légèrement suivant le sens d'avancement de la machine et elles sont inclinées de manière à diriger les fruits vers le convoyeur de droite. Les convoyeurs acheminent ensuite les fruits recueillis jusqu'à un récipient collecteur. L'ensemble des écailles de gauche et l'ensemble des écailles de droite se chevauchent légèrement au centre de la tête de récolte pour réduire le plus possible les espaces par lesquels les fruits pourraient s'échapper. Les écailles de chaque sous-ensemble sont fixées, par l'intermédiaire de leur extrémité externe et au moyen d'une articulation élastique, généralement du type "Silentbloc" ©, sur une rampe fixe solidaire du châssis de la tête de récolte. Lors du passage d'un cep de vigne ou du tronc d'un arbre, celui-ci pousse sur les écailles qui s'escamotent grâce aux "Silentbloc" ©. Ceci permet d'épouser au mieux la forme du tronc pour diminuer la grandeur des espaces par lesquels une certaine quantité de fruits peut s'échapper.

Ce système de plancher de réception constitué d'écailles escamotables convient bien pour la récolte du raisin, mais il présente plusieurs inconvénients pour la récolte d'autres petits fruits tels qu'olives, noisettes, noix, amandes, ..., ces inconvénients résultant de la conformation des plaques de collecte ou écailles équipant actuellement les plans de réception ou planchers des têtes de récolte.

Un premier inconvénient découle du diamètre des troncs des arbres qui sont généralement plus gros que ceux des ceps de vigne. Ceci a pour conséquence d'écarter davantage les écailles au passage des troncs des arbres et, ainsi, d'augmenter les espaces de vide par lesquels les fruits peuvent s'échapper.

Un deuxième inconvénient provient de la longueur des surfaces de frottement des écailles sur le tronc des arbres et de la raideur nécessaire des "Silentbloc" © qui permettent auxdites écailles de s'escamoter au passage d'un tronc. L'effort nécessaire pour escamoter une écaille est exponentiel à son déplacement. De ce fait, plus le diamètre du tronc de l'arbre est important, plus l'effort à fournir par le tronc pour les déplacer est important. Les écailles ont donc tendance à écorcher les troncs des gros arbres, notamment ceux des oliviers qui sont plus fragiles que les troncs des ceps de vigne.

Un troisième inconvénient vient du fait que les olives, les noisettes, les noix, les amandes..., ne sont pas des fruits sucrés et collants comme le raisin. Ils se comportent plutôt comme des billes qui rebondissent et roulent sur toutes les surfaces. Ainsi, les espaces de vide ménagés entre les deux rangées d'écailles, pour laisser un jeu fonctionnel de chevauchement, ceux dûs au chevauchement des ensembles d'écailles de gauche et de droite et ceux créés par le passage des troncs d'arbre sont autant de possibilités de pertes de fruits s'échappant de la tête de récolte.

Il a été proposé (DE 2 036 899, GB 2 007 074) pour éviter d'endommager le tronc des plantes ou pour s'opposer au roulement des baies hors des écailles, de munir le bord de la partie distale des écailles d'un rebord destiné à constituer une bordure émoussée qui ne blesse pas les plantes, et à s'opposer à l'éjection des baies récoltées. Un tel rebord a également été prévu dans le document FR-2-157.824 pour récupérer le jus tombant sur les écailles de réception en même temps que les grappes et les grains de raisin détachés des ceps de vigne par la machine de récolte.

Si la prévision d'un rebord rigide en bordure de la partie distale de l'écaille permet effectivement la récupération d'un certain volume de jus de raisin, elle ne permettrait pas, dans une éventuelle application à la récolte des olives, non prévue dans les documents susmentionnés, de résoudre les problèmes découlant des premier et troisième inconvénients susmentionnés, et elle n'apporterait pas non plus une solution très satisfaisante dans la résolution du problème découlant du deuxième de ces inconvénients.

La présente invention a notamment pour objectif de solutionner les problèmes découlant des inconvénients susmentionnés.

Selon l'invention, ce but est atteint au moyen d'une écaille de collecte comportant une face supérieure et une face inférieure comprises entre une extrémité de fixation ou extrémité proximale et une extrémité libre ou extrémité distale, la bordure de ladite extrémité distale étant munie d'un rebord d'arrêt s'élevant au-dessus du plan dans lequel est comprise ladite face supérieure, et, suivant une importante disposition caractéristique, ledit rebord d'arrêt est constitué par une lèvre souple dotée d'une capacité de déformation élastique.

Selon un mode d'exécution avantageux, le rebord d'arrêt comporte une partie débordante s'élevant en direction de l'extérieur de la bordure de l'extrémité distale de l'écaille.

Le rebord d'arrêt présente une hauteur capable de s'opposer au franchissement de la bordure de l'extrémité distale des écailles, par les fruits roulant ou glissant sur la surface supérieure des écailles.

De manière avantageuse, la plaque constituant le corps de l'écaille est exécutée dans un matériau présentant de bonnes qualités de résistance aux chocs et à l'usure tels que, par exemple polyamide, ou polyéthylène ou autre matière plastique présentant la rigidité requise, tandis que la lèvre périphérique souple est réalisée en polyuréthanne ou autre élastomère de synthèse, ou en caoutchouc.

De façon intéressante, la lèvre souple est rapportée, de préférence de manière amovible, par exemple par vissage, sur le pourtour de la partie distale de ladite plaque, elle peut cependant être formée d'une seule pièce avec le corps ou partie restante de l'écaille par un procédé connu de moulage.

Selon une autre disposition caractéristique, la partie d'extrémité antérieure du rebord d'arrêt qui est celle par laquelle ce dernier entre au contact des troncs des arbres ou arbustes, lors de l'avancement de la tête de récolte, est conformée pour offrir une rigidité supérieure à la partie restante dudit rebord d'arrêt de sorte à s'opposer à son fléchissement en direction du sol lors de sa rencontre avec lesdits troncs.

L'invention concerne également les têtes de récolte équipées d'un plan de collecte ou plancher traversable étanche formé de deux sous-ensembles disposés de part et d'autre du plan vertical médian de ladite tête de récolte, chacun de ces sous-ensembles étant constitué d'une pluralité d'écailles pivotantes comportant les caractéristiques susmentionnées, lesdites écailles étant disposées en succession avec une orientation de sens contraire au sens d'avancement de la tête de récolte, chaque écaille de l'un desdits sous-ensembles étant aboutée par l'intermédiaire de son extrémité distale, avec une écaille de l'autre sous-ensemble.

Chacun des demi-plans de collecte constitués par ces sous-ensembles comportant une barrière ondulée s'appuyant sur la barrière ondulée de l'autre demi-plan de collecte, cette barrière ondulée s'étendant d'une extrémité à l'autre de chaque rang d'écailles.

Lors de l'avancement de la tête de récolte sur un rang d'arbustes fruitiers, les barrières constituées par la succession des rebords d'arrêt dont est munie la partie distale des écailles, épouse la forme des troncs de ces derniers sans les blesser, en se déformant comme une membrane. Cette barrière continue et étanche s'oppose au franchissement des bords internes des demi-plans de collecte par les fruits qui peuvent rouler ou glisser sur ces derniers. De la sorte, la totalité des fruits réceptionnés par chaque demi-plan de collecte se trouve déversée dans le convoyeur latéral adjacent.

Les buts, caractéristiques et avantages ci-dessus, et d'autres encore, ressortiront mieux de la description qui suit et des dessins annexés, dans lesquels :

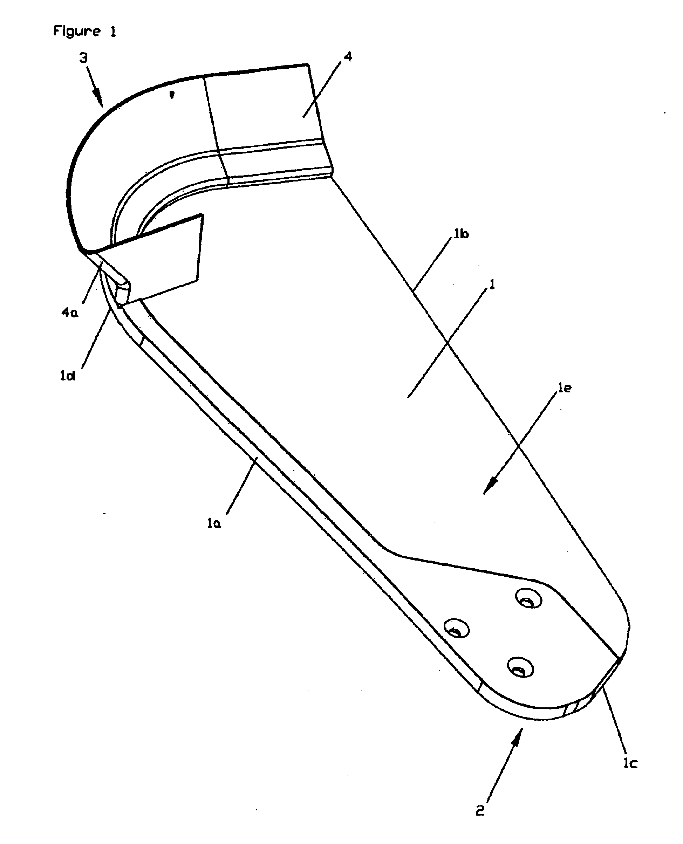

- La figure 1 est une vue en perspective d'un exemple de réalisation de l'écaille à bordure d'arrêt souple selon l'invention.

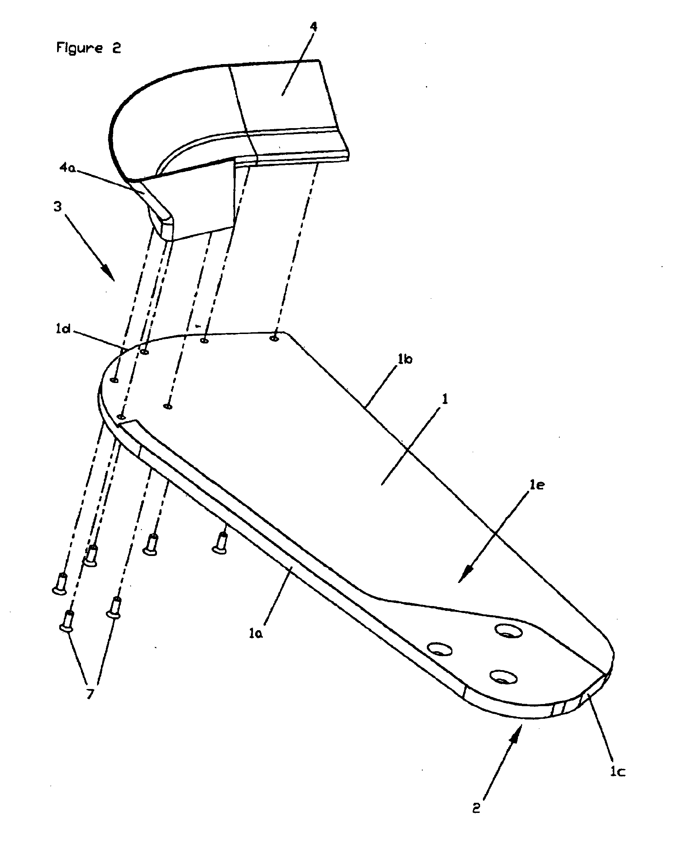

- La figure 2 est une vue en perspective éclatée de l'écaille représentée à la figure 1.

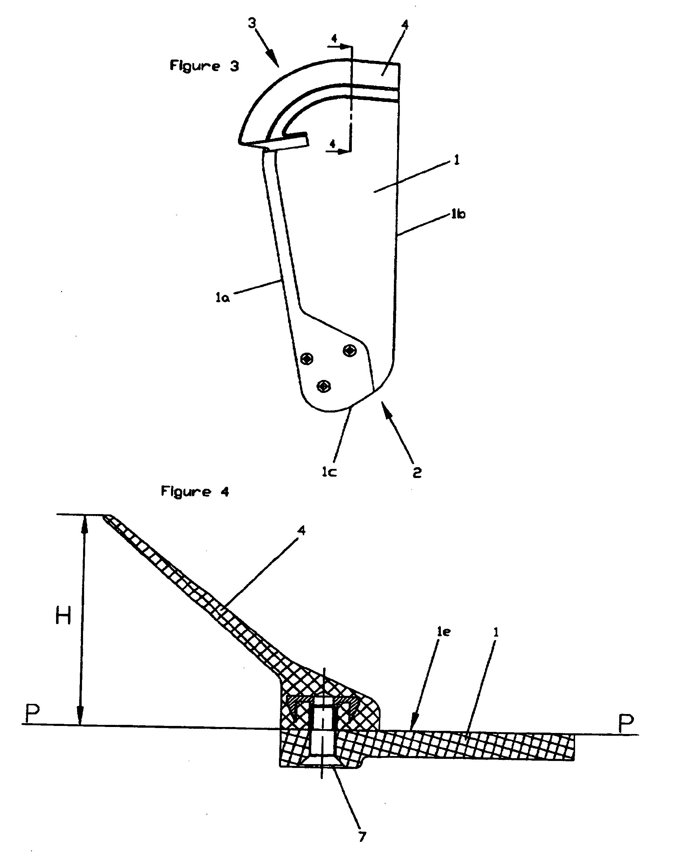

- La figure 3 est une vue en plan de cette écaille.
- La figure 4 est une vue de détail, en coupe selon la ligne 4-4 de la figure 3.

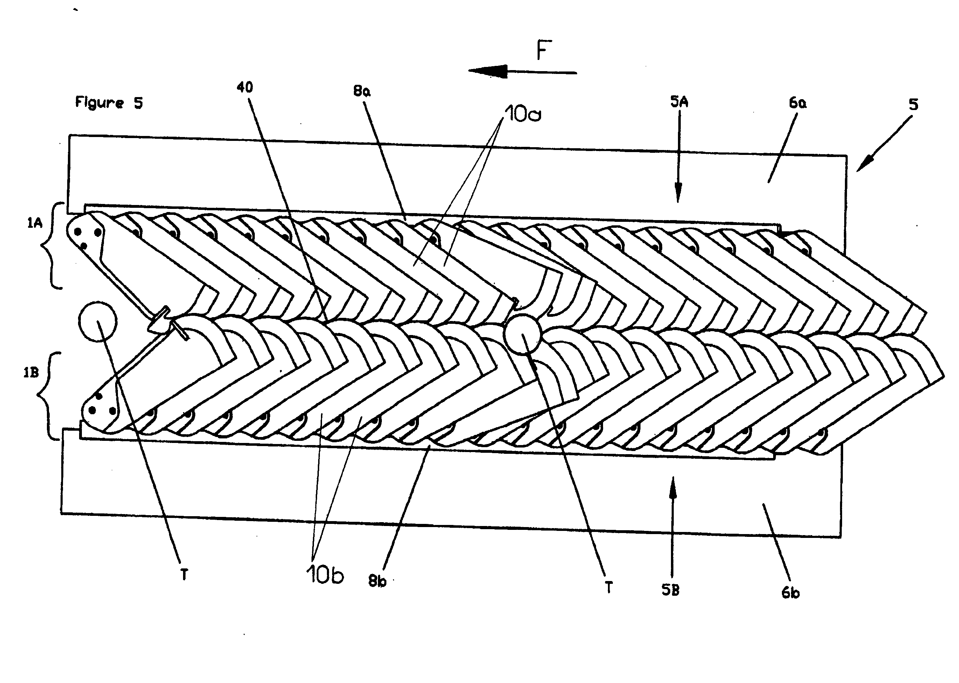

- La figure 5 est une vue de dessus d'un plan de collecte ou plancher de tête de récolte de petits fruits, constitué de deux rangées d'écailles, cette figure illustrant l'étanchéité obtenue au moyen de ce plancher traversable lors du passage d'un tronc d'arbuste fruitier.

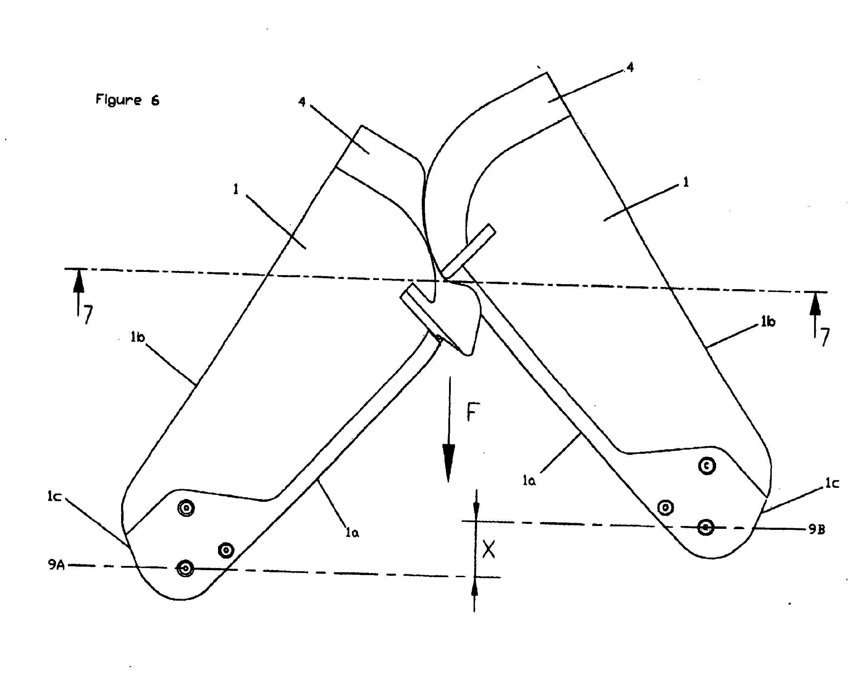

- La figure 6 est une vue en plan montrant l'aboutement et le montage en quinconce de deux écailles appartenant à deux demi-plans de collecte.

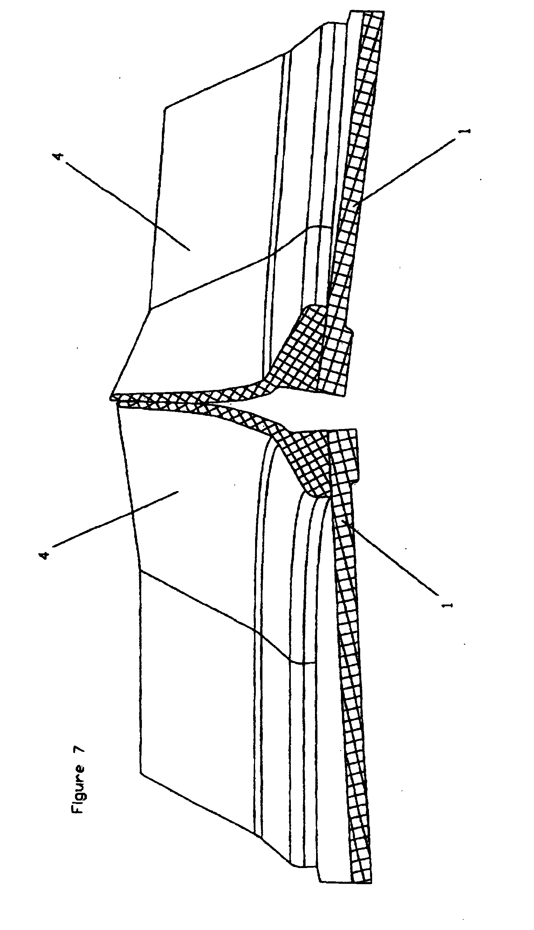

- La figure 7 est une vue, à plus grande échelle, et en coupe selon la ligne 7-7 de la figure 6.
- La figure 8 est une vue en plan illustrant un autre mode de positionnement des écailles.
- La figure 9 est une vue, à plus grande échelle, et en coupe selon la ligne 9-9 de la figure 8.

On se réfère auxdits dessins pour décrire un exemple de réalisation avantageux, bien que non limitatif, de l'écaille à bordure souple et du plancher traversable articulé selon l'invention.

Dans la description et dans les revendications, les termes « supérieure » et « dessus » se référent à la position d'utilisation des écailles.

D'autre part, les termes « interne » et « externe » se réfèrent, respectivement, à une position proche et à une position éloignée du plan médian de la tête de récolte.

L'écaille 1 à laquelle se réfère l'invention est du genre constitué par une plaque de configuration sensiblement trapézoïdale délimitée par deux bords longitudinaux rectilignes, 1a, 1b, et par des bords d'extrémité courbes 1c, 1d. Elle comprend une partie proximale 2 par l'intermédiaire de laquelle elle peut être fixée, par l'intermédiaire d'une articulation élastique, sur une rampe porteuse solidaire du châssis d'une tête de récolte et une partie distale libre 3. Elle présente une largeur croissante à partir de sa partie proximale 2, en direction de sa partie distale 3.

Le bord rectiligne 1a sera appelé « bord antérieur », tandis que le bord rectiligne 1 b sera appelé « bord postérieur », en référence au positionnement des écailles et au sens d'avancement de la tête de récolte.

Selon une importante disposition caractéristique de l'invention, la bordure ou pourtour de l'extrémité distale 3 de la plaque 1 est munie d'un rebord d'arrêt 4 s'élevant au dessus du plan P-P dans lequel est comprise la face supérieure 1e de la plaque 1, et ce rebord d'arrêt 4 est constitué par une lèvre souple dotée d'une capacité de déformation élastique.

D'autre part, selon une autre disposition caractéristique, la lèvre souple 4 s'étend en direction de l'extérieur de la bordure ou pourtour d'extrémité distale 3 de la plaque 1, sur toute la périphérie de celle-ci.

De manière avantageuse, la plaque 1 constituant le corps de l'écaille est réalisée dans un matériau présentant de bonnes qualités de résistance aux chocs et à l'usure tel que, par exemple, polyamide ou polyéthylène ou autre matière plastique présentant la rigidité requise pour remplir sa fonction et, plus précisément, en "Bergamid 66-A70" (marque déposée), tandis que la lèvre périphérique souple est réalisée en polyuréthanne ou autre élastomère de synthèse, ou en caoutchouc.

Suivant une autre disposition caractéristique, le rebord ou lèvre souple débordante 4 est incliné par rapport au plan P-P dans lequel est comprise la face supérieure 1e de la plaque 1.

De préférence, le rebord ou lèvre souple 4 est rapporté de manière amovible ou interchangeable sur le pourtour de l'extrémité distale 3 de la plaque 1 ; par exemple, ledit rebord ou lèvre souple 4 est fixé par vissage, au moyen de vis 7, sur la plaque 1.

La lèvre souple 4 peut cependant être formée d'une seule pièce avec le corps ou partie restante 1 de l'écaille, par un procédé quelconque de moulage connu en soi.

Le rebord ou lèvre souple 4 présente une hauteur H capable de s'opposer au franchissement de la bordure de l'extrémité distale 3 des écailles, par les fruits roulant ou glissant sur la surface supérieure 1e des écailles, en direction de ladite bordure.

Selon une autre disposition caractéristique, la partie d'extrémité antérieure 4a du rebord d'arrêt qui est celle par laquelle ce dernier entre au contact des troncs T des arbres ou arbustes, lors de l'avancement de la tête de récolte, est conformée pour offrir une rigidité supérieure à la partie restante dudit rebord d'arrêt de sorte à s'opposer à son fléchissement en direction du sol lors de sa rencontre avec lesdits troncs.

Ce renfort peut être obtenu par la prévision d'un retour s'étendant en direction de la partie centrale de l'écaille et rattaché à l'extrémité antérieure du rebord d'arrêt 4 de sorte à constituer une nervure, ou angle saillant, de rigidité. Alternativement, il pourrait aussi être obtenu par un épaississement de la partie antérieure 4a par rapport à la portion restante du rebord d'arrêt.

L'invention concerne également une tête de récolte de petits fruits du genre comportant un plan de collecte ou plancher traversable articulé 5 comprenant deux sous-ensembles ou demi-plans de collecte 5A, 5B, constitués, chacun, d'une pluralité d'écailles montées avec une aptitude de pivotement sur des rampes 8a, 8b fixes, solidaires du châssis (non représenté) de la tête de récolte, et disposées à proximité et à l'extérieur des rangées d'écailles. Ces écailles sont disposées en succession, en recouvrement partiel les unes des autres, en direction longitudinale, avec une orientation de sens contraire au sens d'avancement de la tête de récolte, en cours de travail. Plus précisément, dans chaque rangée d'écailles 5A, 5B, le bord longitudinal postérieur 1b de chaque écaille recouvre partiellement, le bord longitudinal antérieur 1a de l'écaille suivante au passage des troncs d'arbre T, les écailles pivotent en direction de l'arrière, en glissant sur l'écaille suivante.

Selon la présente invention, chaque sous-ensemble 5A, 5B, est constitué d'une pluralité d'écailles 10a ou 10b comportant les caractéristiques exposées ci-dessus, chaque écaille de l'un desdits sous-ensembles 5A, 5B, étant aboutée par l'intermédiaire de son extrémité distale 3, qui peut être avantageusement munie d'une lèvre souple débordante 4, avec l'extrémité distale d'une écaille également munie d'une lèvre souple débordante de l'autre sous-ensemble.

Le bord interne de chaque sous-ensemble ou demi-plan de collecte 5A, 5B ainsi constitué d'une rangée d'écailles 10a ou 10b, selon l'invention disposées en succession, présente un rebord d'arrêt 40 continu, étanche et ondulé s'étendant d'une extrémité à l'autre de ladite rangée. Les écailles constituant le plan de collecte ou plancher traversable, c'est-à-dire les écailles de chaque sous-ensemble 5A, 5B, sont montées avec une inclinaison identique descendant en direction des convoyeurs latéraux 6a, 6b, dont le brin inférieur est disposé à proximité et à l'extérieur des rangées d'écailles 5A, 5B, respectivement, de sorte à déverser les fruits dans lesdits convoyeurs.

Selon ce mode de réalisation avantageux, les extrémités distales ou extrémités libres des écailles de chaque sous-ensemble ne sont pas placées en chevauchement des extrémités distales de l'autre sous-ensemble. Les axes d'articulation 9A, 9B des écailles de l'un des sous-ensembles 5A ou 5B, sont décalés d'un demi-pas X, par rapport aux axes d'articulation des écailles de l'autre sous-ensemble 5B ou 5A.

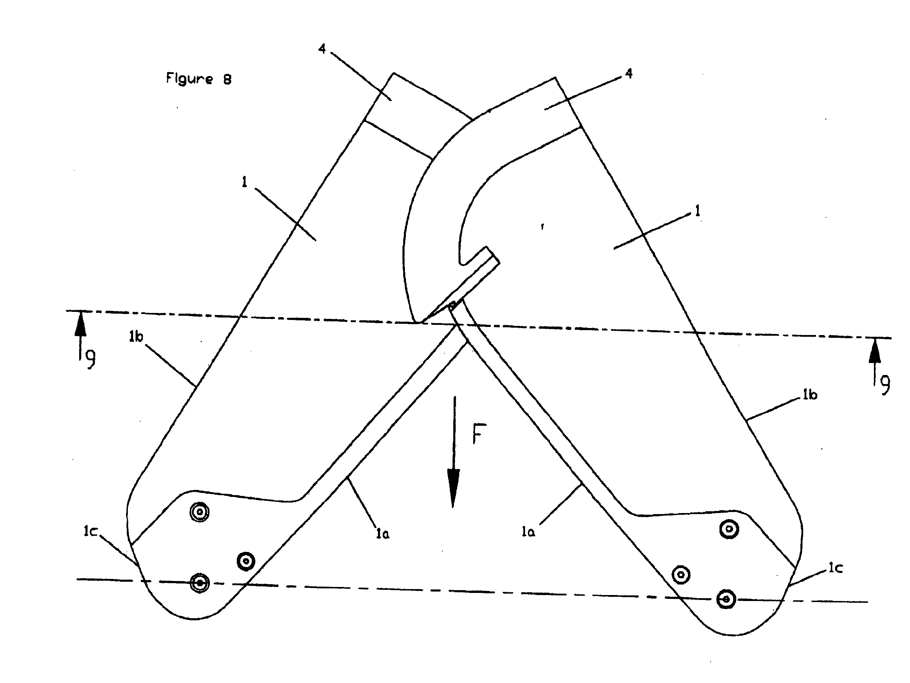

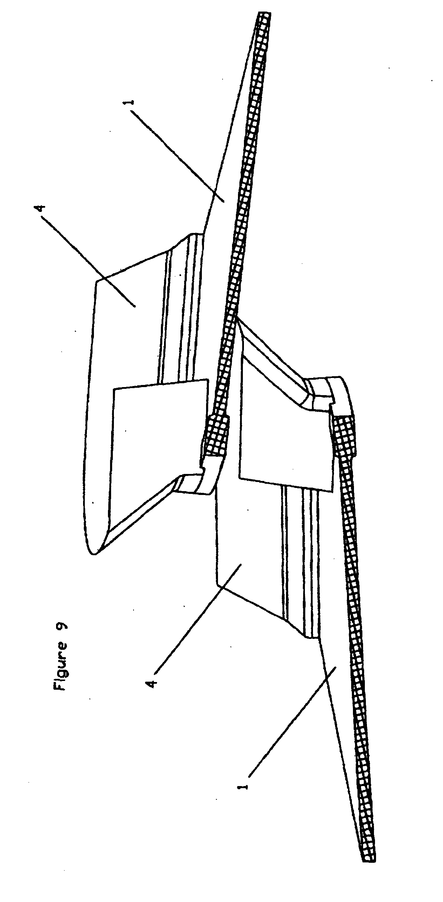

Toutefois, il serait aussi possible de réaliser le plancher traversable avec deux demi-plans de collecte montés avec une inclinaison différente de sorte que la bordure interne de l'un desdits demi-plans de collecte soit placé en recouvrement partiel de la bordure interne de l'autre plan de collecte, comme le montrent les figures 8 et 9.

## Revendications

1. Ecaille pour plancher traversable de collecte équipant les machines de récolte de petits fruits, comportant une face supérieure (1e) et une face inférieure comprises entre une extrémité de fixation ou extrémité proximale (2) et une extrémité libre ou extrémité distale (3) la bordure de ladite extrémité distale (3) étant munie d'un rebord d'arrêt (4), s'élevant au-dessus du plan (P-P) dans lequel est comprise ladite face supérieure, **caractérisée en ce que** ledit rebord d'arrêt (4) est constitué par une lèvre souple dotée d'une capacité de déformation élastique.

2. Ecaille de collecte selon la revendication 1, **caractérisée en ce que** le rebord d'arrêt (4) s'étend en direction de l'extérieur de ladite bordure.

3. Ecaille de collecte selon l'une des revendications 1 ou 2, **caractérisée en ce que** le rebord ou lèvre souple débordante (4) est incliné par rapport au plan (P-P) dans lequel est comprise la face supérieure (1e) de la plaque (1).

4. Ecaille de collecte selon l'une quelconque des revendications 1 à 3, **caractérisée en ce que** le rebord ou lèvre débordante (4) présente une hauteur (H) capable de s'opposer au franchissement de la bordure (1d) de l'extrémité distale (3) des écailles, par les fruits roulant ou glissant sur la surface supérieure (1e) des écailles, en direction de ladite bordure.

5. Ecaille de collecte selon l'une quelconque des revendications 1 à 4, **caractérisée en ce que** la partie d'extrémité antérieure du rebord d'arrêt (4) comporte un renfort (4a).

6. Ecaille de collecte selon la revendication 5, **caractérisée en ce que** le renfort (4a) est obtenu par la prévision d'un retour s'étendant en direction de la partie centrale de l'écaille et rattaché à l'extrémité antérieure du rebord d'arrêt 4 de sorte à constituer une nervure, ou angle saillant, de rigidité.

7. Ecaille de collecte selon la revendication 5, **caractérisée en ce que** le renfort est obtenu par un épaississement de la partie antérieure (4a) par rapport à la portion restante du rebord d'arrêt.

8. Ecaille de collecte selon l'une quelconque des revendications 1 à 7, **caractérisée en ce que** le rebord ou lèvre souple débordante (4) est fixé de manière amovible sur le pourtour de la partie distale (3) de la plaque (1).

9. Ecaille de collecte selon l'une quelconque des revendications 1 à 8, **caractérisée en ce que** la plaque (1) constituant le corps de l'écaille est exécutée en polyamide ou en polyéthylène, tandis que la lèvre souple débordante (4) est réalisée en polyuréthanne ou en caoutchouc ou en un élastomère de synthèse.

10. Tête de récolte de petits fruits du genre comprenant un plan de collecte ou plancher traversable articulé (5) comprenant deux sous-ensembles ou demi-plans de collecte (5A, 5B), constitués, chacun, d'une pluralité d'écailles pivotantes (10a, 10b) disposées en succession, en recouvrement partiel les unes des autres en direction longitudinale, **caractérisée en ce que** lesdites écailles (10a, 10b) comportent les caractéristiques exposées dans l'une quelconque des revendications 1 à 9.

11. Tête de récolte selon la revendication 10, **caractérisée en ce que** les écailles (10a, 10b) des deux sous-ensembles (5A, 5B) sont montées avec une inclinaison identique descendantes en direction des convoyeurs latéraux (6a, 6b), et **en ce que** les écailles (10a ou 10b) de chacun desdits sous-ensembles (5A, 5B) sont aboutées, par l'intermédiaire de leur extrémité distale (3), avec l'extrémité distale des écailles (10b ou 10a) de l'autre sous ensemble (5B, 5A).

12. Tête de récolte selon la revendication 11, **caractérisée en ce que** les axes d'articulation (9A ou 9B) des écailles de l'un des sous-ensembles de collecte (5A ou 5B), sont décalés d'un demi-pas X, par rapport aux axes d'articulation des écailles de l'autre sous-ensemble (5B ou 5A).

13. Tête de récolte selon la revendication 10, **caractérisée en ce que** les deux demi-plans de collecte (5A, 5B) sont montés avec une inclinaison différente, de sorte que la bordure interne de l'un desdits demi-plans de collecte soit placé en recouvrement partiel de la bordure interne de l'autre demi-plan de collecte.

14. Tête de récolte selon l'une quelconque des revendications 10 à 12, **caractérisée en ce que** chaque rangée d'écailles formées d'une pluralité d'écailles (10a et 10b) est bordée par une barrière continue (40) constituée d'une succession de rebords d'arrêt (4), s'étendant le long du bord interne de ladite rangée, sur toute la longueur de celle-ci.

## Patentansprüche

1. Sammelplatte für einen verschwenkbaren Sammelboden zur Ausrüstung von Erntemaschinen für Kleinobst umfassend eine Oberseite (1e) und eine Unterseite zwischen einem Befestigungsende oder proximalen Ende (2) und einem freien Ende oder distalen Ende (3), wobei der Rand des besagten distalen Endes (3) mit einem Auffangrand (4) ausgebildet ist, der aus der Ebene (P-P) herausragt, die die genannte Oberseite einschließt, **dadurch gekennzeichnet, dass** der Auffangrand (4) aus einer flexiblen Lippe mit der Fähigkeit zu einer elastischen Verformung gebildet ist.

2. Sammelplatte nach Anspruch 1 , **dadurch gekennzeichnet, dass** sich der Auffangrand (4) in eine Richtung nach außen von dem Rand erstreckt.

3. Sammelplatte nach den Ansprüchen 1 oder 2, **dadurch gekennzeichnet, dass** der Auffangrand oder die flexible vorspringende Lippe (4) relativ zu der Ebene (P-P), die die Oberfläche (1e) der Platte (1) einschließt, geneigt ist 1.

4. Sammelplatte nach einem der Ansprüche 1 bis 3, **dadurch gekennzeichnet, dass** der Auffangrand oder die flexible vorspringende Lippe (4) eine Höhe (H) besitzen, die einem Übertritt von Obst über den Rand (1 d) des distalen Endes (3) der Platten entgegenwirkt, wenn Obst auf der Oberfläche der Platten in Richtung des besagten Randes rollt oder rutscht.

5. Sammelplatte nach einem der Ansprüche 1 bis 4, **dadurch gekennzeichnet, dass** der vordere Endabschnitt des Auffangrandes (4) ein Verstärkungsteil (4a) aufweist.

6. Sammelplatte nach Anspruch 5 , **dadurch gekennzeichnet, dass** das Verstärkungsteil (4a), durch das Vorsehen einer Rückformung in Richtung auf den zentralen Abschnitt der Platte erhalten wird und mit dem vorderen Ende des Auffangrandes (4) verbunden ist, um so eine Versteifungsrippe oder einen Versteifungswinkel zu bilden.

7. Sammelplatte nach Anspruch 5, **dadurch gekennzeichnet, dass** das Verstärkungsteil durch eine Verdickung des vorderen Teils (4a) relativ zu dem restlichen Abschnitt des Auffangrandes erhalten wird.

8. Sammelplatte nach einem der Ansprüche 1 bis 7, **dadurch gekennzeichnet**, der Auffangrand oder die flexible vorspringende Lippe (4) abnehmbar an der Peripherie des distalen Abschnitts (3) der Platte (1) befestigt ist.

9. Sammelplatte nach einem der Ansprüche 1 bis 8, **dadurch gekennzeichnet, dass** die Platte (1), die den Hüllkörper ausbildet, aus Polyethylen oder Polyamid ausgebildet sind, während die vorspringende flexible Lippe (4) aus Polyurethan oder Gummi oder einem synthetischen Elastomer besteht.

10. Erntekopf zur Ernte von Kleinobst von der Art, die eine Sammelebene oder einen verschwenkbaren Sammelboden (5) aufweisen, die mit zwei Sammel-Untereinheiten oder Sammel-Halbebenen (5A, 5B) ausgebildet sind, die jeweils aus einer Vielzahl von verschwenkbaren, in einer Abfolge angeordneter Sammelplatten (10a, 10b) bestehen und sich zum Teil in Längsrichtung überdecken, **dadurch gekennzeichnet, dass** die besagten Platten (10a, 10b) die Merkmale, die in einem der Ansprüche 1 bis 9 definiert sind, aufweisen.

11. Erntekopf nach Anspruch 10, **dadurch gekennzeichnet, dass** die Platten (10a, 10b) der beiden Untereinheiten (5A, 5B ) mit einer Neigung nach unten in der gleichen Richtung an den Seitenförderer (6a , 6b) angebracht sind und dass sich die Platten (10a oder 10b) jeder der Untergruppen (5A, 5B) mittels ihres distalen Endes (3) mit dem distalen Ende der Platten (10a oder 10b ) der anderen Untergruppe ( 5B, 5A ) aneinanderfügen.

12. Erntekopf nach Anspruch 11, **dadurch gekennzeichnet, dass** die Gelenkachsen ( 9A oder 9B ) der Platten der einen Untereinheit (5A oder 5B), um einen halben Schritt X, relativ zu den Gelenkachsen der Platten der anderen Untereinheit ( 5B oder 5A) versetzt angeordnet sind

13. Erntekopf nach Anspruch 10, **dadurch gekennzeichnet, dass** die beiden Sammel-Halbebenen (5A, 5B) mit unterschiedlicher Neigung angeordnet, so dass die inneren Ränder von einer der besagten Sammel-Halbebenen in einer teilweise Überdeckung der inneren Ränder der anderen Sammel-Halbebenen platziert sind.

14. Erntekopf nach einem der Ansprüche 10 bis 12, **dadurch gekennzeichnet, dass** jede Reihe von Platten aus den mehreren Platten (10a und 10b ) durch eine durchgehende Sperre (40) aus einer Folge von Auffangrändern (4) begrenzt werden, die sich entlang der Innenkante der genannten Reihe über die gesamte Länge derselben erstrecken.

## Claims

1. Scale for traversable collecting table equipping machines for the harvest of small fruits, comprising an upper face (1e) and a lower face arranged between a fixing end or proximal end (2) and a free end or distal end (3), the edge of said distal end (3) being equipped with a stop rim (4), rising above the plane (P-P) in which is comprised said upper face, **characterised in that** said stop rim (4) is constituted by a flexible lip capable of elastic deformation.

2. Collecting scale according to claim 1, **characterised in that** the stop rim (4) extends in the direction of the outside of said edge.

3. Collecting scale according to either of claims 1 or 2, **characterised in that** the rim or overhanging flexible lip (4) is inclined in relation to the plane (P-P) in which is comprised the upper face (1e) of the plate (1).

4. Collecting scale according to any one of claims 1 to 3, **characterised in that** the rim or overhanging lip (4) presents a height (H) capable to prevent fruits rolling or sliding on the upper surface (1e) of the scales, in the direction of the edge, from crossing said edge (1d) of the distal end (3) of the scales.

5. Collecting scale according to any one of claims 1 to 4, **characterised in that** the front end portion of the stop rim (4) comprises a rib (4a).

6. Collecting scale according to claim 5, **characterised in that** the rib (4a) is obtained by providing a return extending in the direction of the central portion of the scale and fastened to the front end of the stop rim (4) in order to form a rigid rib or protruding angle.

7. Collecting scale according to claim 5, **characterised in that** the rib is obtained by thickening the front portion (4a) in relation to the remaining portion of the stop rim.

8. Collecting scale according to any one of claims 1 to 7, **characterised in that** the rim or overhanging flexible lip (4) is removably fixed to the edge of the distal portion (3) of the plate (1).

9. Collecting scale according to any one of claims 1 to 8, **characterised in that** the plate (1) forming the body of the scale is made of polyamide or polyethylene, while the overhanging flexible lip (4) is made of polyurethane or rubber or of a synthetic elastomer.

10. Harvester head for small fruits of the kind comprising a collecting plate or articulated traversable table (5) comprising two collecting sub-assemblies or half-plates (5A, 5B), each formed of a plurality of rotating scales (10a, 10b) arranged in succession, partly overlapping each other in the longitudinal direction, **characterised in that** said scales (10a, 10b) feature the characteristics set out in any one of claims 1 to 9.

11. Harvester head according to claim 10, **characterised in that** the scales (10a, 10b) of the two sub-assemblies (5A, 5B) are mounted with an identical downward inclination in the direction of the lateral conveyors (6a, 6b), and **in that** the scales (10a or 10b) of each of said sub-assemblies (5A, 5B) are abutted, through their distal end (3), with the distal end of the scales (lOb or 10a) of the other sub-assembly (5B, 5A).

12. Harvester head according to claim 11, **characterised in that** the articulation axes (9A or 9B) of the scales of one of the collecting sub-assemblies (5A or 5B) are offset by a half-step X in relation to the articulation axes of the scales of the other sub-assembly (5B or 5A).

13. Harvester head according to claim 10, **characterised in that** both collecting half-plates (5A, 5B) are mounted with a different inclination, so that the internal edge of one of said collecting half-plates is placed partly overlapping the internal edge of the other collecting half-plate.

14. Harvester head according to any one of claims 10 to 12, **characterised in that** each row of scales formed by a plurality of scales (10a and 10b) is edged by a continuous barrier (40) constituted by a succession of stop rims (4), extending along the internal edge of said row, over the entire length thereof.
